# EUROPEAN PATENT SPECIFICATION

(11) **EP 4 088 802 B1**
(45) Date of publication and mention of the grant of the patent: **19.02.2025**
(21) Application number: 22173224.1
(22) Date of filing: 13.05.2022
(51) Int. Cl.: B01D 29/23, B01D 29/64, B01D 29/94, B01D 35/16

(54) **FILTER**
FILTER
FILTRE

(30) Priority: 13.05.2021 IT 202100012296
(43) Date of publication of application: 16.11.2022
(73) Proprietor: ELFI S.r.l., 43044 Collecchio (PR) (IT)
(72) Inventor: COLONNA, Omar, 43044 PARMA (IT); VIGNALI, Luca, 43044 Collecchio (PR) (IT)
(74) Representative: Fanzini, Valeriano

(56) References cited:
- EP-A1- 2 767 321
- EP-A1- 3 530 336
- EP-A2- 0 312 354
- WO-A1-2006/045126
- CN-A- 111 659 177
- US-A- 3 616 932
- US-A- 5 401 396
- US-A- 5 779 901
- US-A1- 2011 220 586
- US-A1- 2017 014 736

## Description

The present invention refers to a filter for retaining, or withholding, corresponding residues or solid particles which are contained in a corresponding fluid to be filtered, in particular in the form of a liquid, and preferably consisting of water.

Filters are known to retain, or withhold, corresponding residues or solid particles which are contained in a corresponding fluid to be filtered, in particular in the form of a liquid, and preferably consisting of water, and which are inserted in corresponding civil or industrial plants that use or treat said fluid to be filtered.

Said already known filters generally comprise means defining a chamber, in particular generally cylindrical, housing filtration means, in particular comprising a corresponding body that is peripherally extended, in particular cylindrical, which has corresponding openings, or holes, for the passage of said fluid to be filtered and for withholding said residues or solid particles, and means for cleaning said filtration means, or body, which are adapted to remove said residues or solid particles from the same filtration means, or body.

However, with the cleaning systems known to date, a particularly effective cleaning of the filtering surface of said filter is not achieved.

CN111659177 discloses a dehairing mechanism comprising a scraper arm hinged to a main rotating shaft with the other end of the scraper arm that is provided with a scraper blade.

WO2006045126 discloses a device comprising a filter equipped with a cleaning device having a hollow shaft equipped with at least one scraper that removes the solid particles from the filter.

EP0312354 discloses a filter in which solids deposited are removed by blades which are biased into engagement with the screen and moved over the screen at an acute angle thereto.

With the present invention it is therefore wished to propose a new solution and/or an alternative to the solutions known up to now and in particular it is proposed to overcome one or more of the drawbacks or problems referred to above, and/or to satisfy one or more requirements referred to above and/or in any case experienced in the art, and in particular which can be deduced from the above.

It is thus provided a filter for retaining, or withholding, corresponding residues or solid particles which are contained in a corresponding fluid to be filtered, in particular in the form of a liquid, and preferably consisting of water; preferably said filter being inserted in a corresponding civil or industrial plant that uses or treats said fluid to be filtered; the filter comprises means defining a chamber, in particular generally cylindrical, housing filtration means, in particular comprising a corresponding a body that is peripherally extended, in particular cylindrical, which has corresponding openings, or holes, for the passage of said fluid to be filtered and for withholding said residues or solid particles, and means for cleaning said filtration means, or body, which are adapted to remove said residues or solid particles from the same filtration means, or body; characterized in that said cleaning means comprise a first and second type of means for removing residues or solid particles from said filtration means, or body.

In this way, an improved cleaning of the filtering surface of said filter can be achieved.

This and other innovative aspects or respective advantageous embodiments, are however, set forth in the appended claims, the technical characteristics of which can be found, together with corresponding advantages achieved, in the following detailed description, illustrating purely non-limiting examples of the embodiment of the invention, which is made with reference to the appended drawings, in which:
- Figure 1 illustrates a schematic perspective view of a first preferred embodiment of filter according to the present invention;
- Figure 2 illustrates a schematic top plan view of the first preferred embodiment of filter according to the present invention;
- Figure 3 illustrates a sectional schematic perspective view of the first preferred embodiment of filter according to the present invention;
- Figure 4 illustrates an enlarged section schematic view, taken along the line A-A of Figure 2, of the first preferred embodiment of filter according to the present invention;
- Figure 5 illustrates a sectional perspective schematic view of a second preferred embodiment of filter according to the present invention;
- Figure 6 illustrates a schematic sectional view, similar to that of Figure 4, of the second preferred embodiment of filter according to the present invention.
- Figure 7A illustrates a sectional perspective schematic view of a third preferred embodiment of filter according to the present invention;
- Figure 7B illustrates a sectional perspective schematic view of an enlarged detail of Figure 7A of the third preferred embodiment of filter according to the present invention;
- Figure 7C illustrates a sectional perspective schematic view of an even more enlarged detail of Figure 7A of the third preferred embodiment of filter according to the present invention;
- Figure 7D illustrates a schematic cross-sectional view with particular emphasis on the engagement and scraping means of the third preferred embodiment of filter according to the present invention;
- Figure 7E illustrates a schematic view of an enlarged detail of Figure 7D;
- Figure 7F illustrates a schematic cross-sectional view with particular emphasis on the means of rotatable sustain for the support means of the cleaning means of the third preferred embodiment of filter according to the present invention.

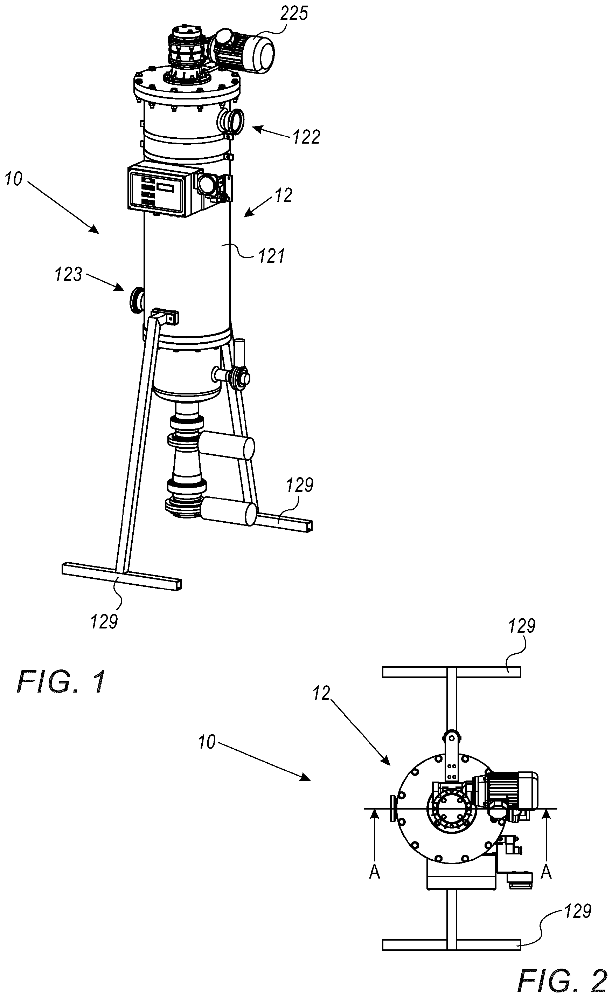

A first preferred embodiment of filter 10 for retaining, or withholding, corresponding residues or solid particles which are contained in a corresponding fluid to be filtered, in particular in the form of a liquid, and preferably consisting of water, is illustrated in the accompanying figures 1 to 4.

Preferably, said filter 10 is inserted, or insertable, in a corresponding civil or industrial plant that uses or treats said fluid to be filtered.

As can be seen from the figures, the filter 10 comprises means 12 defining a chamber 120, in particular generally cylindrical, housing filtration means 14, in particular comprising a corresponding body that is peripherally extended, in particular cylindrical, which has corresponding openings, or holes, for the passage of said fluid to be filtered and for withholding said residues or solid particles, and means 16 for cleaning said filtration means, or body, 14 which are adapted to remove said residues or solid particles from the same filtration means, or body, 14.

As can be seen from the figures, said means defining the chamber 120 are in the form of a corresponding elongated body 12 comprising an external peripheral wall and opposite transverse walls, which overall define said chamber 120, which body 12, as illustrated, is supported by corresponding lower rest feet 129, 129.

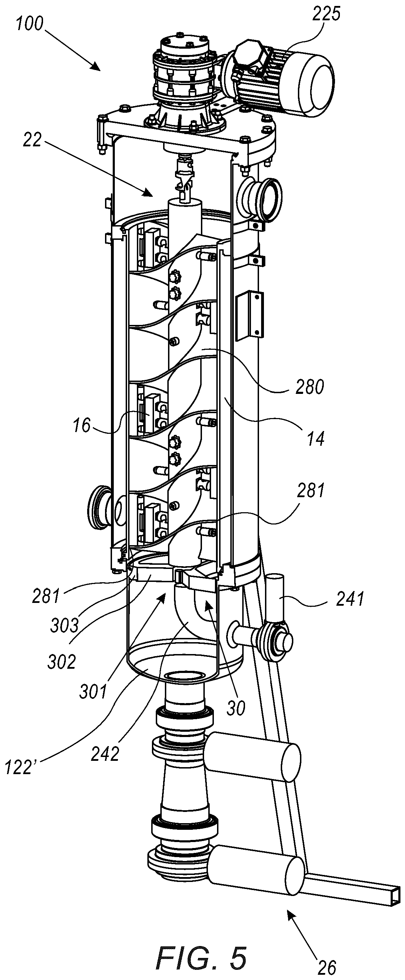

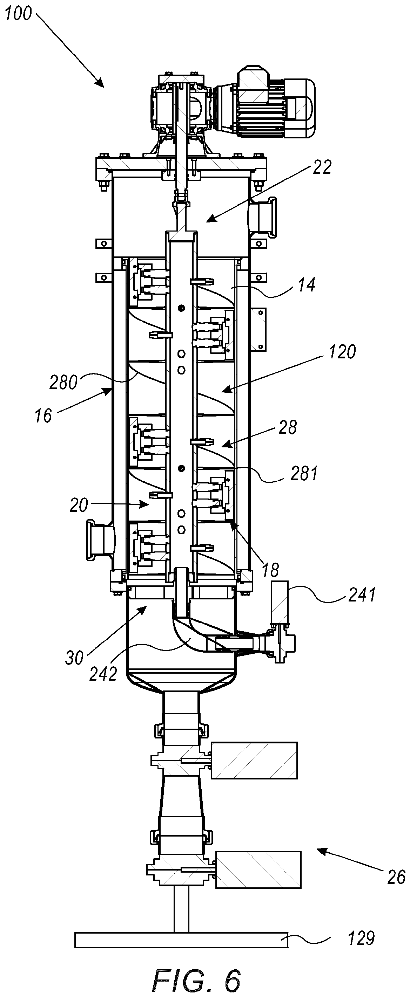

With advantage, as illustrated in said Figures 1 to 4, said cleaning means comprise a plurality of types of means for removing residues or solid particles from said filtration means, or body 14, in particular a first 18 and a second 20 type of means for removing residues or solid particles from said filtration means, or body, and especially, as will be better seen with reference to the second preferred embodiment illustrated in the following Figures 5 and 6, a first 18, a second 20 and a third type 28 of means for removing residues or solid particles from said filtration means, or body 14.

In this way, an improved cleaning of the filtering surface of said filter is achieved.

In particular, the use of a plurality of cleaning means makes it possible to perform a synergistic removal of said residues or solid particles, thus obviating the respective partial inefficiencies of the respective cleaning means.

As can be seen from the figures, in particular, said means, or body, 12 which define, or defines, said housing or filtration chamber 120, comprise, or have, a respective peripheral containment wall 121 internally to which, and radially at a distance from which, said filtration means, or body 14 are housed.

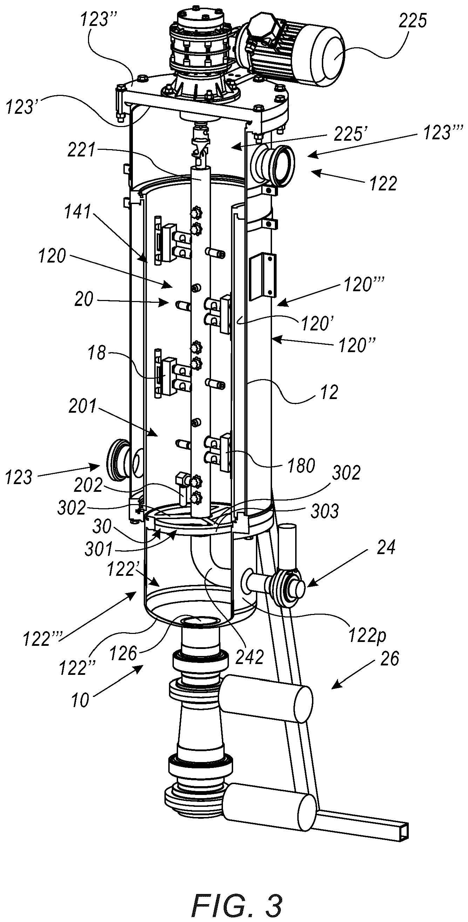

Advantageously, as will better be seen from the following Figures 3, 4, 5 and 6, the latter relating to a second preferred embodiment 100 of filter, and which will in any case be better seen from the continuation of the present description, said means 16 for cleaning said filtration means, or body 14 comprise respective means 18, 28 for engaging, in particular by friction, a corresponding surface, in particular internal, 141 of said filtration means, or body 14, and which preferably operate in such a way as to define corresponding means for scraping said residues or solid particles from said surface 141 of said filtration means, or body 14, and which especially define a respective, in particular first 18 and/or a third 28, type of means for removing residues or solid particles from said filtration means, or body 14.

As can be seen from said Figures 3, 4, 5 and 6, advantageously, said means 18, 28 for engaging, in particular by friction, a corresponding surface, in particular internal, 141 of said filtration means, or body 14, have a respective surface 181, 281 for engaging the corresponding surface 141 of said filtration means, or body 14.

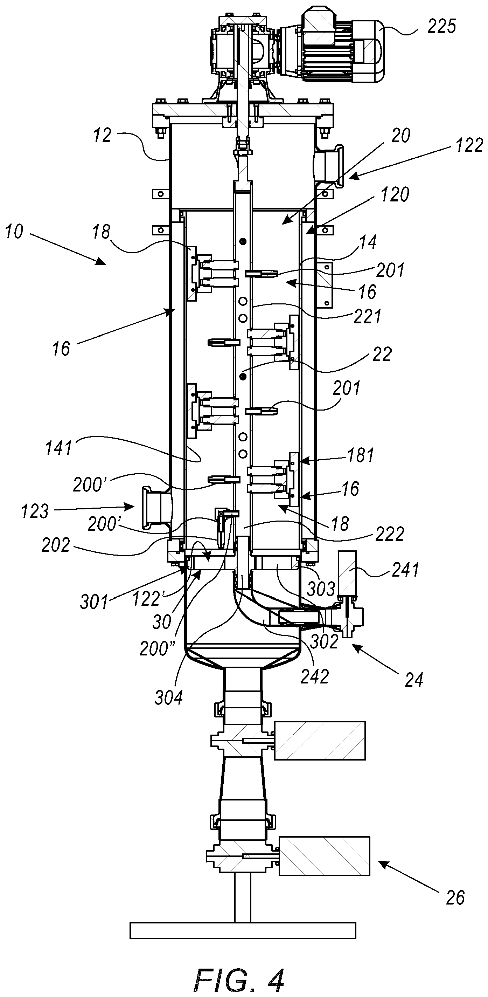

As can be seen in particular from said Figures 3 and 4, appreciably advantageously, in this first preferred embodiment, the means 18 for engaging a corresponding surface, in particular internal, 141 of said filtration means, or body 14, are in the form of corresponding blade, and/or skid, and/or brush means, and/or of another kind, in particular pushed against the internal surface of the filter thanks to corresponding elastic means or spring means.

In particular, said means for engaging a corresponding surface, in particular internal, and, especially, the corresponding spring means can be, and preferably are, realized as provided in the European patent application EP21159775.2 owned by the same Applicant, and the contents of which by this reference are to be considered as an integral part of this description.

Advantageously, as can be particularly seen from said Figures 3 and 4, said means 18 for engaging a corresponding surface, in particular internal, 141, of said filtration means, or body 14, comprise a plurality of elements 180 having a respective surface 181 for engaging the corresponding surface 141 of said filtration means, or body 14, which are preferably adapted, overall, to engage, the entire or substantially the entire, corresponding surface, in particular internal, to be cleaned 141 of said filtration means, or body 14.

As can be seen from said Figures 3 and 4, with appreciable advantage, said elements 180 for engaging said surface to be cleaned 141 of said filtration means, or body 14 are longitudinally spaced from each other and/or angularly spaced from one another, in particular in an evenly distributed manner.

As can be seen from said Figures 3 and 4, in a particularly advantageous manner, said means 16 for cleaning said filtration means, or body 14 comprise means 20 for emitting a corresponding jet of cleaning fluid, in particular defining a respective, especially a second, type of means for removing residues or solid particles from said filtration means, or body 14.

Advantageously, as can be seen from said Figures 3 and 4, said means 20 for emitting a corresponding jet of cleaning fluid are adapted to emit or spray a fluid, in particular a liquid, at high pressure.

With advantage, it is provided that said means 20 for emitting a corresponding jet of cleaning fluid are adapted to emit, or contain, corresponding substances or compounds of chemical or enzymatic type for the treatment of said residues or solid particles or of said surface to be cleaned 141 of said filtration means, or body 14.

As can be seen from said Figures 3 and 4, in an appreciably advantageous manner, said means 20 for emitting a corresponding jet of cleaning fluid are adapted to operate both during the filtering phase and at the time of the washing phases, that is after the conclusion of the respective filtering cycle.

Advantageously, as can be seen from said Figures 3 and 4, said means 20 for emitting a corresponding jet of cleaning fluid are adapted to spray a corresponding cleaning fluid over the entire, or substantially over the entire, surface to be cleaned 141 of said filtration means, or body 14.

As can be seen from said Figures 3 and 4, advantageously, said means 20 for emitting a corresponding jet of cleaning fluid are adapted to spray a corresponding cleaning fluid over at least one corresponding zone, in particular extreme, of said housing chamber 120, that is over the bottom surface 122' of said housing chamber 120, especially inside said filtration means, or body, 14, that is at the lower part thereof.

As can be seen from said Figures 3 and 4, with appreciable advantage, said means 20 for emitting a corresponding jet of cleaning fluid comprise a plurality of spray nozzles 201.

Advantageously, as can be seen from said Figures 3 and 4, said means 20 for emitting a corresponding jet of cleaning fluid comprise a plurality of spray nozzles 201 which are adapted to direct the jet radially against said surface to be cleaned 141 of said filtration means.

Advantageously, as can be seen from said Figures 3 and 4, said spray nozzles 201, which are adapted to direct the jet radially against said surface to be cleaned 141 of said filtration means, or body 14, are longitudinally spaced from each other and/or angularly spaced from one another.

As can be seen from said Figures 3 and 4, in a particularly advantageous manner, said means 20 for emitting a corresponding jet of cleaning fluid comprise a corresponding spray nozzle 202 which is adapted to direct the jet of cleaning fluid perpendicularly and/or towards a corresponding end of said housing chamber 120, in particular downwards, that is towards the bottom 122' of the same housing chamber 120.

As can be seen from said Figures 3 and 4, with advantage, the respective spray nozzle 201, or 202, is at the end of a corresponding conveying tube 200', which respective conveying tube 200' is prolonged in particular radially and/or perpendicularly.

Advantageously, as can be seen from said figures, there are provided sustaining means 22 for said cleaning means that is for a respective plurality of types of means for removing residues or solid particles from said filtration means, or body 14, in particular for a first 18 and a second 20 type of means for removing residues or solid particles from said filtration means, or body 14, especially for a first 18, a second 20 and a third type 28 of means for removing residues or solid particles from said filtration means, or body 14.

Advantageously, as can be seen from said figures, there are provided sustaining means 22 for said means 18, 28 for engaging, in particular by friction, a corresponding surface, in particular internal, 141 of said filtration means, or body 14, preferably operating in such a way as to define means for scraping said residues or solid particles from said surface 141 of said filtration means, or body 14.

As can be seen from the said figures, in an appreciably advantageous manner, there are provided sustaining means 22 for said means 20 for emitting a corresponding jet of cleaning fluid.

As can be seen from the figures, advantageously, in practice there are provided means 22 of common sustain for said means 18, 28 for engaging a corresponding surface, in particular internal, 141 of said filtration means, or body, 14 and for said means 20 for emitting a corresponding jet of cleaning fluid.

Advantageously, as can be seen from the figures, said sustaining means 22 for said means 18, 28 for engaging a corresponding surface, in particular internal, 141 of said filtration means, or body 14, and/or for said means 20 for emitting a corresponding jet of cleaning fluid, are in the form of rotatable means.

As can be seen from said figures, with appreciable advantage, said sustaining means 22 for said means 18, 28 for engaging a corresponding surface, in particular internal, 141 of said filtration means, or body 14, and/or for said means 20 for emitting a corresponding jet of cleaning fluid, comprise a corresponding shaft 221 that is longitudinally or axially extended, in particular coaxial and/or internal to said filtration means, or body 14.

As can be seen from said figures, in a particularly advantageous manner, said sustaining means 22, that is said shaft 221, have, or has, an internal conduit 222 for conveying said cleaning fluid to said means 20 for emitting a corresponding jet of cleaning fluid.

Advantageously, as can be seen from said figures, said sustaining means 22, that is said shaft 221, are, or is, rotatable, in particular about own axis.

As can be seen from said figures, with advantage, said elements 180 for engaging said surface to be cleaned 141 of said filtration means, or body, 14 and/or said spray nozzles 201 adapted to direct the jet radially, that is the corresponding tube, are prolonged radially from said sustaining means 22, that is from said shaft 221.

As can be seen from said figures, in an appreciably advantageous manner, corresponding elements 180 for engaging said surface to be cleaned 141 of said filtration means, or body, 14 and/or spray nozzles 201, that is the respective tube, adapted to direct the jet radially, are prolonged radially aligned with each other at opposite sides of said sustaining means 22, that is of said shaft 221.

Advantageously, as can be seen from said figures, the respective spray nozzle 202 is directed parallel to the axis of said sustaining means 22, that is of said shaft 221, to which it is connected through a corresponding, in particular radial, section 200".

As can be seen from said Figures 3 and 4, advantageously, there are provided means 225 for the rotational actuation of said sustaining means 22, that is of said shaft 221, which in particular are in the form of a corresponding motor and/or are supported above said support means, or body, 12.

As can be seen from said Figures 3 and 4, with appreciable advantage, means 24 for supplying said washing fluid are provided.

Advantageously, as can be seen from said Figures 3 and 4, said means 24 for supplying said washing fluid comprise a corresponding valve for activating 241 the passage of said cleaning fluid and/or a corresponding conduit for joining 242 with said conduit within said sustaining means 22, that is said shaft 221.

As can be seen from said Figures 3 and 4, in a particularly advantageous manner, said means 24 for supplying said washing fluid are prolonged, or are arranged, below or, it would also be conceivable above, said support means, or body 12, in particular passing through the respective upper cover of the filter.

As can be seen from said Figures 3 and 4, with advantage, means 26 for discharging said residues or solid particles from said filtration means, or body 14 are provided.

Advantageously, as can be seen from said Figures 3 and 4, said means 26 for discharging said residues or solid particles from said filtration means, or body 14 are prolonged below said chamber 120 for housing said filtration means, or body 14, and are in communication therewith, that is they are prolonged below said support means, or body 12.

As can be seen from said Figures 3 and 4, in an appreciably advantageous manner, there are provided means, or mouth, for the entry 122 of the fluid to be filtered and means, or mouth, for the exit 123 of the filtered fluid, respectively in and from said filtering chamber 120, which in particular are provided at different height levels from each other, especially with said means, or mouth, for the entry 122 which are provided above said filtering chamber 120 and with said means, or mouth, for the exit 123 which are provided in the lower part of the same said filtering chamber 120.

As can be seen from said Figures 3 and 4, advantageously, said fluid with the solid particles or residues enters centrally or longitudinally to said filter 10 and exits through the corresponding openings in said filter radially to the same filter 10.

Advantageously, as can be seen from the following Figures 5 and 6, in accordance with a second preferred embodiment 100 of filter according to the present invention, the components of which are similar or equivalent to those of the previous first preferred embodiment are marked with the same numerical references and, for not excessively burdening the present description, they are not commented again in detail, it is envisaged that, in particular in addition to said first 18 and second 20 types of means for removing residues or solid particles from said filtration means, or body 14, use is made of a third type 28 of means for removing residues or solid particles from said filtration means, or body 14.

It must be understood, however, that although the present embodiment is particularly preferred, according to alternative embodiments not illustrated herein, these means 28 for removing residues or solid particles from said filtration means, or body 14 could also be used singly, or only with said first 18 or with said second 20 type of means for removing residues or solid particles from said filtration means, or body 14.

As illustrated, advantageously these means 28 for removing said residues or solid particles from said filtration means, or body 14 are adapted to define also means for supplying said residues or solid particles from said filtration means, or body 14 towards said means 26 for discharging said residues or solid particles from said filtration means, or body 14.

Means for supplying said residues or solid particles from said filtration means, or body 14 towards said means 26 for discharging said residues or solid particles from said filtration means, or body 14 are therefore provided. In particular, said supply means are adapted to exert a forced supply, that is an action of pushing, said residues or solid particles from said filtration means, or body 14 towards said means 26 for discharging said residues or solid particles from said filtration means, or body 14.

With further advantage, there are, therefore, provided means for removing residues or solid particles from said filtration means, or body 14 and/or means for supplying said residues or solid particles, from said filtration means, or body 14 towards corresponding means 26 for discharging said residues or solid particles from said filtration means, or body 14, which are in the form of an auger 28, in particular which is supported by, and rotatable with, said sustaining means 22, that is by, or with, said shaft 221.

Advantageously, said auger 28 comprises a respective helix, or helix-shaped blade, 280, which has an extreme edge 281 defining said means for engaging, in particular by friction, a corresponding surface, in particular internal, 141 of said filtration means, or body 14.

In practice, it should however be understood that, in a different embodiment, not illustrated in the accompanying figures, said auger 28 may also not contact the internal surface 141 of said filtration means, or body, 14 and operate solely as means for supplying said residues or solid particles from said filtration means, or body, 14 towards said means 26 for discharging said residues or solid particles from said filtration means, or body 14.

In practice, in accordance with the present second preferred embodiment 100, there are provided sustaining means 22 for means for removing residues or solid particles from said filtration means, or body 14 which are in the form of a respective auger 28.

Furthermore, in accordance with the present second preferred embodiment 100, there are therefore also provided means 22 of common sustain for said means 18 for engaging a corresponding surface, in particular internal, 141 of said filtration means, or body, 14 and for said means 20 for emitting a corresponding jet of cleaning fluid and for the means for removing residues or solid particles from said filtration means, or body, 14 which are in the form of a respective auger 28.

Advantageously, as can be seen from said figures, said chamber 120 housing said filtration means 14 is delimited above by a corresponding transverse surface 123', in particular of a cover 123", preferably supporting said means 225 for the rotational actuation of said sustaining means, or shaft, 22 for said cleaning means, and below by a transverse surface 121', in particular of a bottom wall 122" of said support means, or body 12, in particular at the centre of which there is provided a hole 126 for the discharge of residues.

Advantageously, as can be seen from said figures, in practice, said support means, or body, 12 comprise a perpendicularly prevalent and substantially central part 120‴, defined by a corresponding wall 120", in particular cylindrical, at which said filtration means, or body, 14 are housed, a lower part 122"', in particular in which said joining conduit 242 for said means 24 for supplying said washing fluid is housed and, possibly, an upper part 123‴, in which means 225' for the connection, in particular of a cardan type, and for transmitting motion from said means 225 for the rotational actuation to the same sustaining means 22, or shaft 221 for said cleaning means are located. As illustrated, said lower part 122‴ is delimited perimetrically by a peripheral wall 122p, preferably cylindrical and on the prolongation, or substantially on the prolongation, of said filtration means, or body, 14, that is recessed with respect to the peripheral wall 120" of said prevalent and central part 120‴, of said support means, or body, 12, which peripheral wall 120" is also prolonged at the said upper part 123" of the same support means, or body 12.

As illustrated, said filtration means, or body 14 are connected, in fluidor liquid-tightness, at the respective ends, with said peripheral wall 120" of said support means, or body 12, in particular remaining slightly spaced radially therefrom from the internal surface 120' of the peripheral wall 120" of said prevalent and central part 120‴ of the same support means, or body 12.

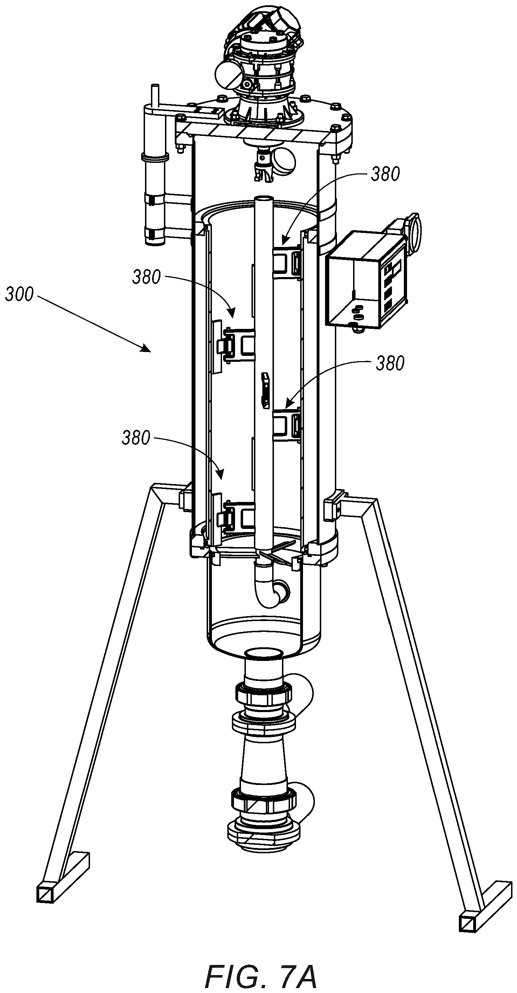

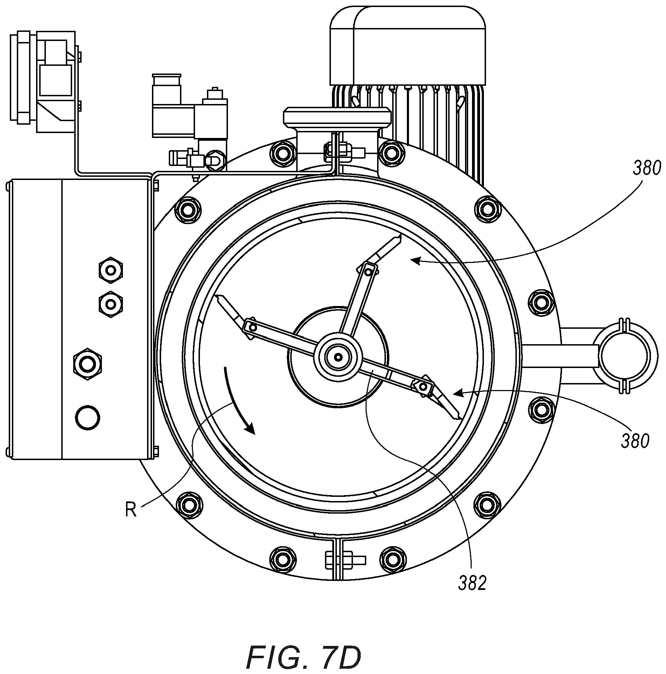

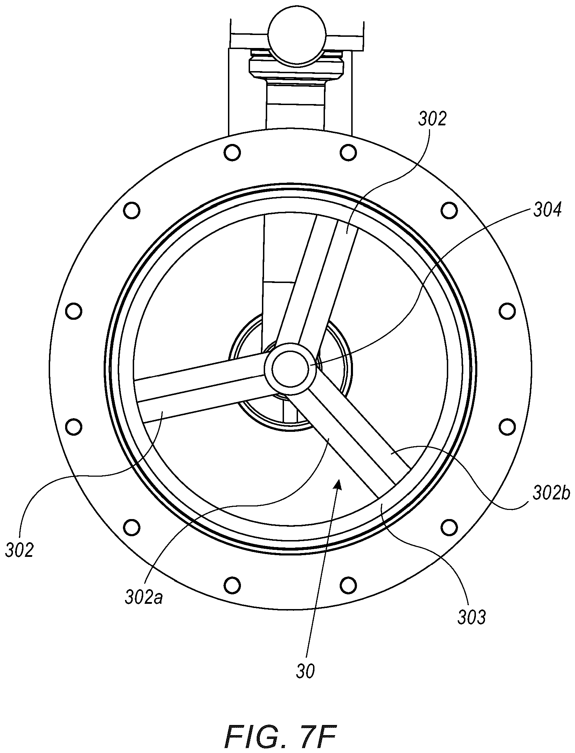

In the following Figures 7A to 7F, a third preferred embodiment 300 of filter according to the present invention is illustrated, in which the components that are similar or equivalent to those of the previous preferred embodiments are marked with the same numerical references and, for not excessively burdening the present description, they are not commented again in detail. With advantage, as can be seen from said Figures 7A to 7F, the respective engagement element 380, of said means 18 for engaging, and preferably scraping, a respective surface, in particular internal, to be cleaned 141, of said filtration means, or body 14, is in the form of a corresponding block 380, in particular elongated vertically or parallel to the axis of said sustaining means, or shaft, 22 for said cleaning means, and has a respective surface, in particular extreme or free, 381 for engaging, and preferably scraping, the corresponding surface to be cleaned 141 of said filtration means, or body 14.

Advantageously, as can be seen from said Figures 7A to 7F, said block 380 for engaging, and preferably scraping, the corresponding surface to be cleaned 141 of said filtration means, or body 14, is radially prolonged and is preferably inclined at an angle with respect to the respective radial direction, that is with respect to a direction perpendicular to the respective tangent of the circumference which is defined by said filtration means, or body 14, in particular being inclined at an angle A in the direction opposite to the angular direction of rotation R of the respective engagement block 380.

With particular advantage, as can be seen from said figures, the respective block 380 for engaging, and preferably scraping, the corresponding surface to be cleaned 141 of said filtration means, or body 14, is connected to said sustaining means, or shaft, 22 for said cleaning means, through corresponding attachment means 382.

In a particularly advantageous manner, as can be seen from the figures, said means for the attachment 382 of the respective block 380 for engaging, and preferably scraping, the corresponding surface to be cleaned 141 of said filtration means, or body 14, to said sustaining means, or shaft, 22 for said cleaning means, are prolonged transversely, that is radially, from the same sustaining means, or shaft, 22 for said cleaning means.

With advantage, as can be seen from said figures, said block 380 for engaging, and preferably scraping, the corresponding surface 141 of said filtration means, or body 14, is connected in a freely rotatable manner to said means 382 for its attachment to said sustaining means, or shaft, 22 for said cleaning means, in particular through a corresponding pin 384, preferably vertical or parallel to the axis of said filtration means, or body 14.

Advantageously, as can be seen from said figures, said means 382 for the attachment to said sustaining means, or shaft, 22 for said cleaning means are in the form of a fork-shaped element between whose prongs 382a, 382b said rotation pin 384 is prolonged, which supports a projecting portion 386, in particular projecting from the opposite side with respect to the surface, in particular extreme or free, 381 for engaging, and preferably scraping, the corresponding surface to be cleaned 141 of said filtration means, or body 14, of said engagement and scraping means 18, or respective engagement and scraping block 380.

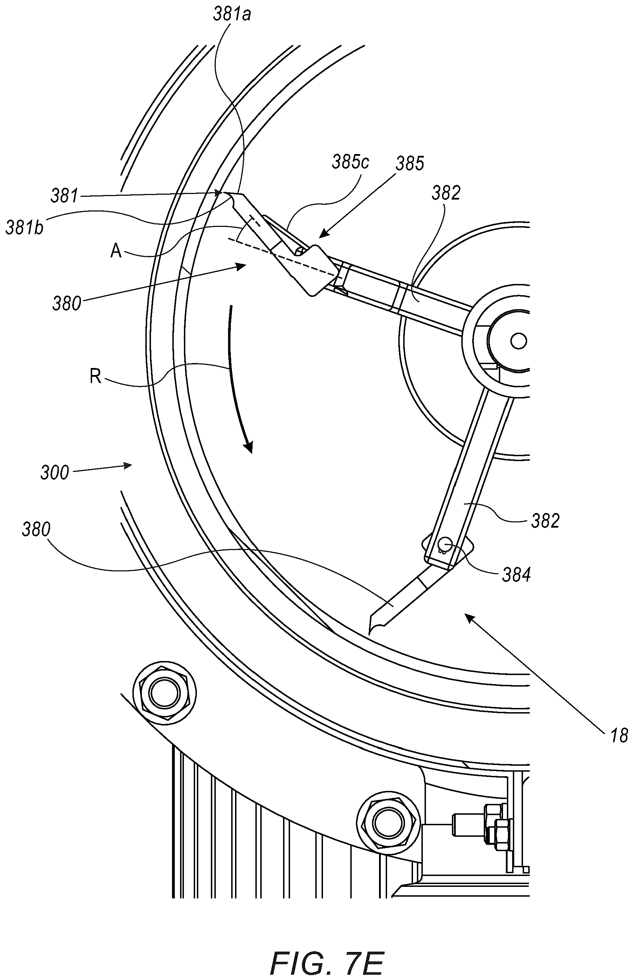

In a particularly advantageous manner, as can be seen from said Figure 7E, said means of engagement 18, or respective block of engagement 380 against the same surface, in particular internal, to be cleaned 141 of said filtration means, or body 14, has a respective pointed end 381, that is it ends with an engagement surface 381 that is thin, or which has a limited thickness. In particular, as can be seen from said Figure 7E, said engagement and scraping surface 381 is in the form of a pointed surface delimited by opposite surfaces 381a, 381b, one of which is curved, with concavity turned according to the angular direction of rotation of the respective block 380, so as to confer an advantageous hook-like configuration to the same engagement end 381.

In this way, a more effective scraping of said surface, in particular internal, 141 of said filtration means, or body, 14 is obtained.

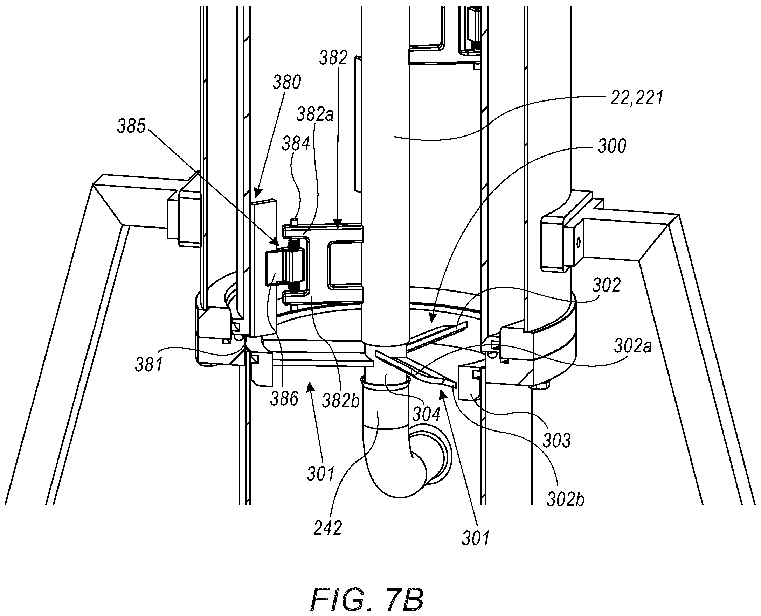

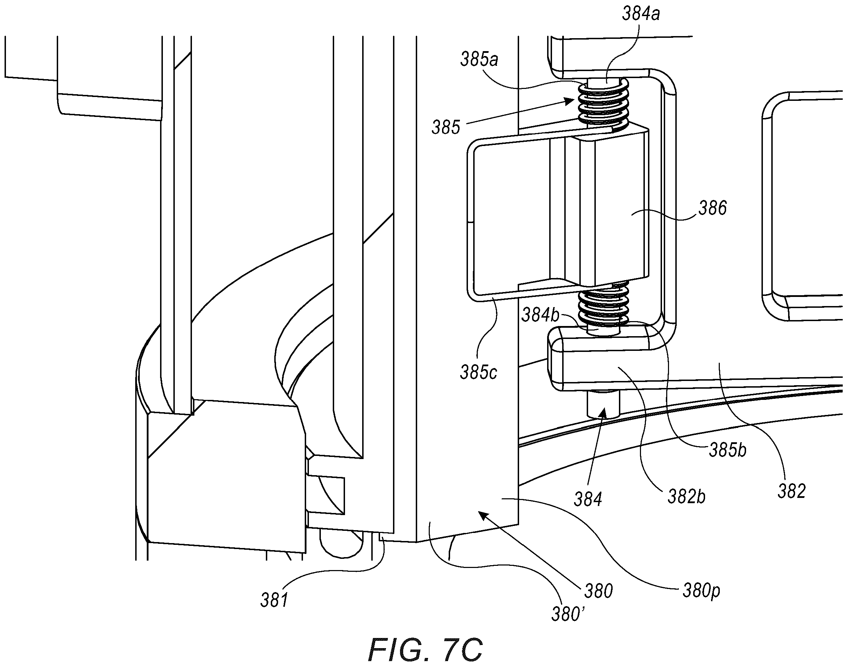

Advantageously, as can be seen from said Figures 7B, 7C and 7E, said means 18 for engaging a corresponding surface, in particular internal, 141 of said filtration means, or body 14, comprise elastic means 385 for pushing said engagement means 18, or the respective engagement block 380, against the same surface, in particular internal, to be cleaned 141 of said filtration means, or body 14.

In a particularly advantageous manner, as can be seen from said figures, said elastic means 385 for pushing said engagement means 18, or respective engagement block 380, against the same surface, in particular internal, 141 of said filtration means, or body 14, are in the form of a torsion spring 385 which pushes the same engagement means 18, or respective engagement block 380, in rotation against said surface, in particular internal, 141 of said filtration means, or body 14, in particular in rotation concordant with the direction R of rotation of said engagement means 18, or respective one of the engagement block 380.

Advantageously, as can be seen from said Figures 7B and 7C, said elastic pushing means 385 are wound on said rotation pin 384, in particular having corresponding first and second helix-shaped portions 385a, 385b, which are wound on both opposite portions 384a, 384b of said pin 384 which protrude from opposite sides of said projecting portion 386 of said elongated block 380, and having a corresponding central U-shaped branch 385c, which extends radially from said first and second helix-shaped portions 385a, 385b and which engages the rear face 380p of the main body 380' of the engagement means 18, or of the respective engagement block 380.

Advantageously, as can be seen from said figures, means 30 of rotatable support for said sustaining means 22, or shaft 221, for said cleaning means are provided.

With particular advantage, as can be seen from said figures, within said means, or body, of support 12, that is within said housing chamber 120, there are provided means 30 of passage for said fluid, or liquid, towards said means 26 for discharging said residue or solid particles from said filtration means, or body 14.

Advantageously, as can be seen from said figures, said means 30 of rotatable support for said sustaining means 22 for said cleaning means define said means 30 of passage for said fluid, or liquid, towards said means 26 for discharging said residue or solid particles from said filtration means, or body 14.

**In** a particularly advantageous manner, as can be seen from said figures, said means 30 of rotatable support for said sustaining means 22 for said cleaning means and/or said means 30 of passage for said fluid, or liquid, towards said means 26 for discharging said residues or solid particles from said filtration means, or body 14, comprise a transverse body, in particular with a discoidal shape, 301, preferably integral with said support means, or body 12, that is with the peripheral wall, preferably cylindrical, delimiting said housing chamber 120.

With particular advantage, as can be particularly seen from said Figures 7A to 7F, said means 30 of rotatable support for said sustaining means 22 for said cleaning means and/or said means 30 of passage for said fluid, or liquid, towards said means 26 for discharging said residues or solid particles from said filtration means, or body 14, that is the respective said transverse body 301, are, or is, in the vicinity of an end of said support means, or body 12, in particular above or upstream of the zone, in particular below, of them 122‴ in which said conduit for joining 242 said conduit within said sustaining means 22, that is said shaft 221 with the discharge means 26 is located, or is prolonged.

Advantageously, as can be particularly seen from said Figures 7A to 7F, said body, in particular discoidal, 301 comprises a plurality of radial, or substantially radial, spokes 302, in particular which are prolonged between an external flange 303 integral with the internal surface of said body, in particular discoidal, 301 and a tubular sleeve 304, supported by them and with freely rotatable insertion and sustain in said sustaining means, or shaft, 22 for said cleaning means, which tubular sleeve 304, on the vertically opposite part, is inserted into said conduit for joining 242 with said conduit within said sustaining means 22, that is said shaft 221.

Advantageously, as can be seen in particular from said Figures 7A to 7F, the respective radial, or substantially radial, spoke 302 of said body, in particular discoidal, 301 has a profile, in particular a respective cross-section, generally inclined downwards.

**In** this way, thanks to the fact that the cleaning movement of said means 18 for engaging a corresponding surface, in particular internal, 141 of said filtration means, or body, 14 creates a rotary motion to the fluid advancing towards the underlying exit, it is possible to favour the flow of the fluid, or liquid, towards said means 26 for discharging said residues or solid particles from said filtration means, or body 14, limiting the risk of creating undesired turbulence in said fluid, or liquid.

**In** a particularly advantageous manner, as can be particularly seen from said Figures 7A to 7F, the respective radial, or substantially radial, spoke 302 of said body, in particular discoidal, 301 has a profile, in particular a respective cross-section, with a wavy shape, preferably having a first section 302a which is generally concave upwards and a second section 302b, on the prolongation of the first section 302a, which is generally concave downwards.

In this way, an advantageous aerodynamic profile that resembles a helix-shaped blade is defined.

In practice, as is evident, the technical characteristics illustrated above allow, individually or in a respective combination, achieving one or more of the following advantageous results:
- an improved cleaning of the filtering surface of said filter is achieved;
- a special washing, in particular with corresponding chemical or enzymatic compounds, of the same filter can be carried out;
- a more effective scraping of said surface, in particular internal, of said filtration means, or body is achieved;
- thanks to the fact that the cleaning movement of said means for engaging a corresponding surface, in particular internal, of said filtration means, or body, creates a rotary motion to the fluid advancing towards the underlying exit, it is possible to favour the flow of the fluid, or liquid, towards said means for discharging said residues or solid particles from said filtration means, or body, limiting the risk of creating an undesired turbulence in said fluid, or liquid.

The present invention is susceptible to evident industrial application. The person skilled in the art will also be able to imagine numerous modifications and/or variations to be made to the same invention, while remaining within the scope of the inventive concept, as extensively explained. Furthermore, the person skilled in the art will be able to imagine further preferred embodiments of the invention comprising one or more of the above illustrated features of the above-referenced preferred embodiment, in particular as set forth in the appended claims. Moreover, it must also be understood that all the details of the invention can be replaced by technically equivalent elements.

## Claims

1. Filter (10) for retaining, or withholding, corresponding residues or solid particles which are contained in a corresponding fluid to be filtered, in particular in the form of a liquid, and preferably consisting of water; preferably said filter (13) being inserted in a corresponding civil or industrial plant that uses or treats said fluid to be filtered; the filter (10) comprises means (12) defining a chamber (120), in particular generally cylindrical, housing the filtration means (14), in particular comprising a corresponding body that is peripherally extended, in particular cylindrical, which has corresponding openings, or holes, for the passage of said fluid to be filtered and for withholding said residues or solid particles, and means (16) for cleaning said filtration means, or body (14) which are adapted to remove said residues or solid particles from the same filtration means, or body (14), in which said means (16) for cleaning said filtration means, or body, (14) comprise means (18) for engaging by friction, a corresponding internal surface (141) of said filtration means, or body, (14), and which operate in such a way as to define corresponding means for scraping said residues or solid particles from said surface (141) of said filtration means, or body, (14); said means (18) for engaging a corresponding surface, in particular internal, (141), of said filtration means, or body (14), comprise a plurality of elements (180) having a respective surface (181) for engaging the corresponding surface (141) of said filtration means, or body (14); the respective engagement element (380), of said means for engaging (18) is in the form of a corresponding block (380), having a respective surface, extreme or free, (381) for engaging, and scraping, the corresponding surface to be cleaned (141) of said filtration means, or body (14); said block (380) for engaging, and scraping, the corresponding surface to be cleaned (141) of said filtration means, or body (14), is radially prolonged and is inclined at an angle with respect to the respective radial direction that is, with respect to the direction perpendicular to the respective tangent of the circumference defined by said filtration means, or body (14), being inclined at an angle (A) in the direction opposite to the angular direction of rotation (R) of the respective engagement block (380); said means (18) for engaging a corresponding internal surface, (141) of said filtration means, or body, (14), comprising elastic means (385) for pushing said engagement means (18), against the same internal surface to be cleaned (141) of said filtration means, or body, (14); **characterized in that** said engagement and scraping surface (381) is in the form of a pointed surface delimited by opposite surfaces (381a, 381b), one of which is curved, with concavity turned according to the angular direction of rotation of the respective block (380), so as to confer an advantageous hook-like configuration to the same engagement end (381).

2. Filter according to claim 1, **characterized in that** said means for cleaning comprise a plurality of types of means for removing residues or solid particles from said filtration means, or body (14), including a first (18) and a second (20) type of means for removing residues or solid particles from said filtration means, or body (14), especially a first (18), a second (20) and a third type (28) of means for removing residues or solid particles from said filtration means, or body (14).

3. Filter according to any one of the preceding claims, **characterized in that** said means (12) defining said housing or filtration chamber (120) comprise, or have, a respective peripheral containment wall (121) internally to which, and radially at a distance from which, said filtration means, or body (14) are housed.

4. Filter according to any one of the preceding claims 2 and 3, **characterized in that** said means (18) for engaging, by friction, a corresponding internal surface (141) of said filtration means, or body (14), and which operate in such a way as to define corresponding means for scraping said residues or solid particles from said surface (141) of said filtration means, or body (14), define a first type of means for removing residues or solid particles from said filtration means, or body (14).

5. Filter according to any one of the preceding claims, **characterized in that** said means (18) for engaging a corresponding internal surface (141), of said filtration means, or body (14), comprise a plurality of elements (180) having a respective surface (181) for engaging the corresponding surface (141) of said filtration means, or body (14), which are preferably adapted, overall, to engage, the entire or substantially the entire, corresponding internal surface to be cleaned (141) of said filtration means, or body (14).

6. Filter according to any one of the preceding claims, **characterized in that** said elements (180) for engaging said surface to be cleaned (141) of said filtration means or body (14) are longitudinally spaced from each other and/or angularly spaced from one another.

7. Filter according to any one of the preceding claims 2 to 6, **characterized in that** said means (16) for cleaning said filtration means, or body (14) comprise means (20) for emitting a corresponding jet of cleaning fluid, in particular defining a respective, in particular a second, type of means for removing residues or solid particles from said filtration means, or body (14).

8. Filter according to claim 7, **characterized in that** said means (20) for emitting a corresponding jet of cleaning fluid are adapted to emit or spray a fluid, in particular a liquid, at high pressure.

9. Filter according to any one of the preceding claims 7 and 8, **characterized in that** said means (20) for emitting a corresponding jet of cleaning fluid are adapted to emit, or contain, corresponding substances or compounds of chemical or enzymatic type for the treatment of said residues or solid particles or of said surface to be cleaned.

10. Filter according to any one of the preceding claims 7 to 9, **characterized in that** said means (20) for emitting a corresponding jet of cleaning fluid are adapted to operate both during the filtering phase and at the time of the washing phases, i.e., after the conclusion of the respective filtering cycle.

11. Filter according to any one of the preceding claims 7 to 10, **characterized in that** said means (20) for emitting a corresponding jet of cleaning fluid are adapted to spray a corresponding cleaning fluid over the entire, or substantially over the entire, surface to be cleaned (141) of said filtration means, or body (14).

12. Filter according to any one of the preceding claims 7 to 11, **characterized in that** said means (20) for emitting a corresponding jet of cleaning fluid comprises a plurality of spray nozzles (201).

13. Filter according to any one of the preceding claims 7 to 12, **characterized in that** said means (20) for emitting a corresponding jet of cleaning fluid comprise a plurality of spray nozzles (201) adapted to direct the jet radially against said surface to be cleaned (141) of said filtration means.

14. Filter according to any one of the preceding claims 7 to 13, **characterized in that** said spray nozzles (201), which are adapted to direct the jet radially against said surface to be cleaned (141) of said filtration means, or body (14), are longitudinally spaced from each other and/or angularly spaced from one another.

15. Filter according to any one of the preceding claims, **characterized in that** there are provided sustaining means (22) for said cleaning means, that is for a respective plurality of types of means for removing residues or solid particles from said filtration means, or body (14), in particular for a first (18) and a second (20) type of means for removing residues or solid particles from said filtration means, or body (14), especially for a first (18), a second (20) and a third type (28) of means for removing residues or solid particles from said filtration means, or body (14).

16. Filter according to any one of the preceding claims, **characterized in that** said elastic means (385) for pushing said engagement means (18), or the respective engagement block (380), against the same internal surface (141) of said filtration means, or body (14), are in the form of a torsion spring (385) that pushes the same engagement means (18), or respective engagement block (380), in rotation against said internal surface (141) of said filtration means, or body (14); and **in that** said elastic pushing means (385) are wound on said rotation pin (384), in particular having corresponding first and second helix-shaped portions (385a, 385b), which are wound on both opposite portions (384a, 384b) of said rotation pin (384) which protrude from the opposite sides of said projecting portion (386) of said elongated block (380), and having a corresponding central U-shaped branch (385c), which extends radially from said first and second helix-shaped portions (385a, 385b) and which engages the rear face (380p) of the main body (380') of the engagement means (18), or of the respective engagement block (380).

## Patentansprüche

1. Filter (10) zum Zurückhalten bzw. Einschließen entsprechender Rückstände oder Feststoffpartikel, die in einem entsprechenden zu filternden Fluid, insbesondere in Form einer Flüssigkeit, und vorzugsweise bestehend aus Wasser, enthalten sind; vorzugsweise wird der Filter (13) in eine entsprechende zivile oder industrielle Anlage eingesetzt, die das zu filternde Fluid verwendet oder behandelt; der Filter (10) umfasst Mittel (12), die eine insbesondere im Allgemeinen zylindrische Kammer (120) definieren, in der die Filtermittel (14) untergebracht sind, und insbesondere einen entsprechenden Körper umfassend, der sich um den Umfang erstreckt, insbesondere zylindrisch, der Öffnungen oder entsprechende Öffnungen oder Löcher für den Durchgang der zu filternden Flüssigkeit und zum Zurückhalten der Rückstände oder festen Partikel sowie Mittel (16) zum Reinigen der Filtermittel oder Körper (14) aufweist, die zur Beseitigung der Rückstände oder festen Partikel desselben Filtermittels oder Körpers (14) geeignet sind; wobei die Mittel (16) zum Reinigen der Filtermittel oder des Körpers (14) Mittel (18) umfassen, um mit einer entsprechenden Innenfläche (141) der Filtermittel oder des Körpers (14) in Reibungskontakt zu kommen, die so funktionieren, dass sie entsprechende Mittel zum Abschaben der festen Rückstände oder Partikel von der Oberfläche (141) des Filtermittels oder des Körpers (14) umfassen, wobei die Mittel (18) zum Eingriff mit einer entsprechenden Oberfläche, insbesondere einer Innenfläche (141) des Filtermittels oder Körpers (14) eine Vielzahl von Elementen (180) mit einer entsprechenden Oberfläche (181) zum Eingriff mit der entsprechenden Oberfläche (141) des Filtermittels oder Körpers (14) umfassen; wobei das jeweilige Eingriffselement (380) des Eingriffsmittels (18) die Form eines entsprechenden Blocks (380) aufweist, der eine entsprechende, äußerste oder freie Oberfläche (381) zum Eingriff und zum Abschaben der entsprechenden zu reinigenden Oberfläche (141) der Filtermittel bzw. Körpers (14), wobei der Block (380) zum Eingriff und zum Abschaben der zu reinigenden entsprechenden Oberfläche (141) der Filtermittel oder des Körpers (14) radial verlängert ist und sich in einem Winkel zur jeweiligen Radialrichtung, also gegenüber der Richtung senkrecht zur jeweiligen Tangente des Umfangs, der durch das Filtermittel oder den Körper (14) definiert wird, geneigt ist, wobei er in einem Winkel (A) in die Richtung geneigt ist, die der Winkeldrehrichtung (R) des jeweiligen Eingriffsblocks (380) entgegengesetzt ist; wobei die Mittel (18) zum Eingriff mit einer entsprechenden Innenfläche (141) des Filtermittels oder des Körpers (14) elastische Mittel (385) zum Drücken des Eingriffsmittels (18) gegen dieselbe von den Filtermitteln oder Körpern (14) zu reinigenden Innenfläche (141) zu drücken; **dadurch gekennzeichnet, dass** die Eingriffs- und Schabefläche (381) die Form einer gepunkteten Fläche hat, die durch gegenüberliegende Flächen (381a, 381b) begrenzt ist, von denen eine mit einer Konkavität gekrümmt ist, die in die Richtung der Winkeldrehung des jeweiligen Blocks (380) weist, um dem gleichen Eingriffsende (381) eine vorteilhafte hakenförmige Konfiguration zu verleihen.

2. Filter nach Anspruch 1, **dadurch gekennzeichnet, dass** die Reinigungsmittel mehrere Arten von Mitteln zum Entfernen von Rückständen oder festen Partikeln aus den Filtermitteln oder dem Körper (14) umfassen, bestehend aus einer ersten (18) und einem zweiten (20) Typ von Mitteln zum Entfernen von Rückständen oder festen Partikeln aus dem Filtermittel oder Körper (14), insbesondere aus einem ersten (18), einem zweiten (20) und einem dritten Typ (28) von Mitteln zum Entfernen von Rückständen oder festen Partikel des Filtermittels oder Körpers (14).

3. Filter nach einem der vorhergehenden Ansprüche, **dadurch gekennzeichnet, dass** die Mittel (12), die das Gehäuse oder die Filterkammer (120) definieren, eine entsprechende periphere Begrenzungswand (121) umfassen, innerhalb deren und radial an einer Entfernung davon die Filtermittel bzw. der Körper (14) untergebracht sind.

4. Filter nach einem der vorhergehenden Ansprüche 2 und 3, **dadurch gekennzeichnet, dass** die Mittel (18) dazu dienen, durch Reibung mit einer entsprechenden Innenfläche (141) der Filtermittel oder des Körpers (14) in Kontakt zu kommen, so dass sie entsprechende Mittel zum Abschaben der Rückstände oder festen Partikel von der Oberfläche (141) des Filtermittels oder des Körpers (14) umfassen und dazu geeignet sind, einen ersten Typ von Mitteln zum Entfernen von Rückständen oder festen Partikeln des Filtermittels oder Körpers (14), zu definieren.

5. Filter nach einem der vorhergehenden Ansprüche, **dadurch gekennzeichnet, dass** die Mittel (18) zum Kontakt mit einer entsprechenden Innenfläche (141) der Filtermittel oder des Körpers (14) eine Vielzahl von Elementen (180) umfassen, die eine jeweilige Kontaktfläche (181) mit der entsprechenden Oberfläche (141) des Filtermittels oder des Körpers (14) aufweisen, die vorzugsweise im Allgemeinen so angepasst sind, dass sie mit der gesamten oder im Wesentlichen gesamten entsprechenden zu reinigenden Innenfläche (141) des Filtermittels oder Körpers (14) in Kontakt kommen.

6. Filter nach einem der vorhergehenden Ansprüche, **dadurch gekennzeichnet, dass** die Kontaktelemente (180) mit der zu reinigenden Oberfläche (141) des Filtermittels oder des Körpers (14) in Längsrichtung voneinander beabstandet sind und/oder im Winkel voneinander beabstandet sind.

7. Filter nach einem der vorhergehenden Ansprüche 2 bis 6, **dadurch gekennzeichnet, dass** die Mittel (16) zum Reinigen des Filtermittels oder des Körpers (14) Mittel (20) zum Ausstoßen eines entsprechenden Reinigungsflüssigkeitsstrahls umfassen, insbesondere definierend einen entsprechenden, insbesondere einen zweiten Typ, von Mitteln zum Entfernen von Rückständen oder festen Partikeln aus dem Filtermittel oder dem Körper (14) definieren.

8. Filter nach Anspruch 7, **dadurch gekennzeichnet, dass** die Mittel (20) zum Ausstoßen eines entsprechenden Reinigungsflüssigkeitsstrahls dazu ausgelegt sind, ein Fluid, insbesondere eine Flüssigkeit, unter hohem Druck auszustoßen oder zu versprühen.

9. Filter nach einem der vorhergehenden Ansprüche 7 und 8, **dadurch gekennzeichnet, dass** die Mittel (20) zum Ausstoßen eines entsprechenden Reinigungsflüssigkeitsstrahls dazu ausgelegt sind, entsprechende Substanzen oder Verbindungen chemischer oder enzymatischer Typ für die Behandlung der Rückstände oder der Feststoffpartikel bzw. der zu reinigenden Oberfläche auszugeben oder zu enthalten.

10. Filter nach einem der vorhergehenden Ansprüche 7 bis 9, **dadurch gekennzeichnet, dass** die Mittel (20) zum Ausstoßen eines entsprechenden Reinigungsflüssigkeitsstrahls so ausgelegt sind, dass sie sowohl während der Filtrationsphase als auch während der Waschphasen, also nach Abschluss des jeweiligen Filtrationszyklus, arbeiten.

11. Filter nach einem der vorhergehenden Ansprüche 7 bis 10, **dadurch gekennzeichnet, dass** die Mittel (20) zum Ausstoßen eines entsprechenden Reinigungsflüssigkeitsstrahls dazu ausgelegt sind, eine entsprechende Reinigungsflüssigkeit über die gesamte Oberfläche oder im Wesentlichen über die gesamte zu reinigenden Oberfläche (141) von der Filtereinrichtung bzw. dem Körpers (14) zu sprühen.

12. Filter nach einem der vorhergehenden Ansprüche 7 bis 11, **dadurch gekennzeichnet, dass** die Mittel (20) zum Ausstoßen eines entsprechenden Reinigungsflüssigkeitsstrahls mehrere Sprühdüsen (201) umfassen.

13. Filter nach einem der vorhergehenden Ansprüche 7 bis 12, **dadurch gekennzeichnet, dass** die Mittel (20) zum Ausstoßen eines entsprechenden Reinigungsflüssigkeitsstrahls mehrere Sprühdüsen (201) umfassen, die den Strahl radial gegen die zu reinigende Oberfläche der Filtermittel (141) richten können.

14. Filter nach einem der vorhergehenden Ansprüche 7 bis 13, **dadurch gekennzeichnet, dass** die Sprühdüsen (201) dazu geeignet sind, den Strahl radial gegen die zu reinigende Oberfläche (141) des Filtermittels oder Körpers (14) in Längsrichtung voneinander beabstandet und/oder im Winkel voneinander beabstandet, zu richten.

15. Filter nach einem der vorhergehenden Ansprüche, **dadurch gekennzeichnet, dass** Trägermittel (22) für das Reinigungsmittel, also für jeweils mehrere Typen von Mitteln zur Beseitigung von Rückständen oder Feststoffpartikeln aus dem Filtermittel, oder Körper (14), insbesondere für einen ersten (18) und einen zweiten (20) Typ von Mitteln zum Entfernen von Rückständen oder festen Partikeln aus dem Filtermittel oder Körper (14), insbesondere für einen ersten (18), einen zweiten (20) und einen dritten Typ (28) von Mitteln zum Entfernen von Rückständen oder festen Partikeln aus dem Filtermittel oder Körper (14), geeignet sind.

16. Filter nach einem der vorhergehenden Ansprüche, **dadurch gekennzeichnet, dass** die elastischen Mittel (385) zum Drücken der Eingriffsmittel (18) oder des jeweiligen Eingriffsblocks (380) gegen dieselbe Innenfläche (141) der Filtermittel oder des Körpers (14) die Form einer Torsionsfeder (385) aufweisen, die die Eingriffsmittel (18) oder den entsprechenden Eingriffsblock (380) gegen die Innenfläche (141) des Filtermittels oder Körpers (14) in Drehung drückt; und dass die elastischen Druckmittel (385) auf dem Drehzapfen (384) aufgewickelt sind, insbesondere indem sie erste und zweite entsprechende helixförmige Teile (385a, 385b) aufweisen, die auf den beiden gegenüberliegenden Seiten (384a, 384a, 384b) des Drehzapfens (384), die von gegenüberliegenden Seiten des vorstehenden Abschnitts (386) des länglichen Blocks (380) vorstehen und einen entsprechenden U-förmigen zentralen Zweig (385c), der sich radial von den ersten und zweiten helix-förmigen Abschnitten (385a, 385b) erstreckt und mit der hinteren Oberfläche (380p) des Hauptkörpers (380') des Eingriffsmittels (18) bzw. des jeweiligen Eingriffsblocks (380) in Kontakt kommt.

## Revendications

1. Filtre (10) pour retenir, ou contenir, des résidus ou des particules solides correspondants qui sont contenus dans un fluide correspondant à filtrer, notamment sous forme d'un liquide, et de préférence constitué d'eau; de préférence ledit filtre (13) étant inséré dans une installation civile ou industrielle correspondante qui utilise ou traite ledit fluide à filtrer; le filtre (10) comprend des moyens (12) définissant une chambre (120), notamment généralement cylindrique, abritant les moyens de filtration (14), comprenant notamment un corps correspondant qui s'étend périphériquement, notamment cylindrique, qui présente des ouvertures, ou des trous, correspondants pour le passage dudit fluide à filtrer et pour retenir lesdits résidus ou particules solides, et des moyens (16) pour nettoyer lesdits moyens de filtration, ou corps (14) qui sont adaptés pour éliminer lesdits résidus ou particules solides du même moyen de filtration, ou corps (14); dans lequel lesdits moyens (16) pour nettoyer lesdits moyens de filtration ou corps (14) comprennent des moyens (18) pour venir en contact par frottement avec une correspondante surface interne (141) desdits moyens de filtration, ou corps (15), qui fonctionnent de telle sorte qu'ils définissent des moyens correspondants pour gratter lesdits résidus ou particules solides de ladite surface (141) desdits moyens de filtration, ou corps (14), lesdits moyens (18) pour un engagement avec une surface correspondante, notamment interne (141) desdits moyens de filtration, ou corps (14) comprennent une pluralité des éléments 8180) avec une surface respective (181) pour un engagement avec la surface correspondante (141) desdits moyens de filtration, ou corps (14); le respectif élément d'engagement (380) desdits moyens d'engagement (18) se trouve en forme d'un bloc correspondant (380), ayant une surface respective, éxtrème ou libre (381) pour un engagement et un grattement de la surface correspondante (141) à nettoyer desdits moyens de filtration, ou corps (14) et radialement prolongée et inclinée selon un angle par rapport à la respective direction radiale, c'est-à-dire par rapport à la direction perpendiculaire à la respective tangente de la circonférence définie par les dits moyens de filtration, ou corps (14) étant inclinée selon un angle (A) dans la direction opposée à la diretion de rotation angulaire (R) du respectif bloc d'engagement (380); lesdits moyens (18) d'engagement avec une surface interne correspondante (141) dudit moyen de filtration, ou corps (14) comprenant des moyens élastiques (385) pour pousser lesdits moyens d'engagement (18) contre la même surface interne (141) à nettoyer desdits moyens de filtration, ou corps (14); **caractérisé en ce que** ladite surface d'engagement et de grattement (381) se trouve en forme d'une surface en pointillés délimitée par des surfaces opposées (381a, 381b), l'une des quelles étant courbe avec une concavité tournée vers la direction angulaire de rotation du bloc respectif (380), de sorte à conférer une configuration avantageuse en forme de crochet à partir de la même extrémité d'engagement (381).

2. Filtre selon la revendication 1, **caractérisé en ce que** lesdits moyens de nettoyage comprennent une pluralité de types de moyens pour éliminer les résidus ou les particules solides desdits moyens de filtration, ou corps (14), comprenant un premier (18) et un deuxième (20) type de moyens pour éliminer les résidus ou les particules solides desdits moyens de filtration, ou corps (14), notamment un premier (18), un deuxième (20) et un troisième type (28) de moyens pour éliminer les résidus ou les particules solides desdits moyens de filtration, ou corps (14).

3. Filtre selon l'une quelconque des revendications précédentes, **caractérisé en ce que** lesdits moyens (12) définissant ledit boîtier ou chambre de filtration (120) comprennent, ou présentent, une paroi de confinement périphérique respective (121) intérieurement à laquelle, et radialement à une distance de laquelle, sont logés lesdits moyens de filtration, ou corps (14).

4. Filtre selon une des revendications précédentes 2 et 3, **caractérisé en ce que** lesdits moyens (18) pour venir en contact, par frottement, avec une surface correspondante interne (141) desdits moyens de filtration, ou corps (14), qui fonctionnent de telle sorte qu'il définissent des moyens correspondants pour gratter lesdits résidus ou particules solides de ladite surface (141) desdits moyens de filtration, ou corps (14), et pour définir un premier type des moyens pour éliminer des résidus ou particules solides desdits moyens de filtration, ou corps (14).

5. Filtre selon l'une quelconque des revendications précédentes, **caractérisé en ce que** lesdits moyens (18) de contact avec une surface correspondante interne (141), dudit moyen de filtration, ou corps (14), comprennent une pluralité d'éléments (180) présentant une surface respective (181) de contact avec la surface correspondante (141) dudit moyen de filtration, ou corps (14), qui sont de préférence adaptés, globalement, pour venir en contact avec la totalité ou sensiblement la totalité de la surface correspondante interne, à nettoyer (141) dudit moyen de filtration, ou corps (14).

6. Filtre selon l'une quelconque des revendications précédentes, **caractérisé en ce que** lesdits éléments (180) de contact avec ladite surface à nettoyer (141) dudit moyen de filtration, ou corps (14) sont espacés longitudinalement les uns des autres et/ou espacés angulairement les uns des autres.

7. Filtre selon l'une quelconque des revendications précédentes 2 à 6, **caractérisé en ce que** lesdits moyens (16) de nettoyage dudit moyen de filtration, ou corps (14) comprennent des moyens (20) d'émission d'un jet correspondant de fluide de nettoyage, définissant notamment un type respectif, notamment un deuxième, de moyens d'élimination de résidus ou particules solides dudit moyen de filtration, ou corps (14).

8. Filtre selon la revendication 7, **caractérisé en ce que** lesdits moyens (20) d'émission d'un jet correspondant de fluide de nettoyage sont adaptés pour émettre ou pulvériser un fluide, notamment un liquide, à haute pression.

9. Filtre selon l'une quelconque des revendications précédentes 7 et 8, **caractérisé en ce que** lesdits moyens (20) d'émission d'un jet correspondant de fluide de nettoyage sont adaptés pour émettre, ou contenir, des substances ou composés correspondants de type chimique ou enzymatique pour le traitement desdits résidus ou particules solides ou de ladite surface à nettoyer.

10. Filtre selon l'une quelconque des revendications 7 à 9 précédentes, **caractérisé en ce que** lesdits moyens (20) d'émission d'un jet correspondant de fluide de nettoyage sont adaptés pour fonctionner aussi bien pendant la phase de filtration qu'au moment des phases de lavage, c'est-à-dire après la conclusion du cycle de filtration respectif.

11. Filtre selon l'une quelconque des revendications 7 à 10 précédentes, **caractérisé en ce que** lesdits moyens (20) d'émission d'un jet correspondant de fluide de nettoyage sont adaptés pour pulvériser un fluide de nettoyage correspondant sur la totalité, ou sensiblement sur la totalité, de la surface à nettoyer (141) dudit moyen de filtration, ou corps (14).

12. Filtre selon l'une quelconque des revendications 7 à 11 précédentes, **caractérisé en ce que** lesdits moyens (20) d'émission d'un jet correspondant de fluide de nettoyage comprennent une pluralité de buses de pulvérisation (201).

13. Filtre selon l'une quelconque des revendications précédentes 7 à 12, **caractérisé en ce que** lesdits moyens (20) d'émission d'un jet correspondant de fluide de nettoyage comprennent une pluralité de buses de pulvérisation (201) adaptées pour diriger le jet radialement contre ladite surface à nettoyer (141) dudit moyen de filtration.

14. Filtre selon l'une quelconque des revendications précédentes 7 à 13, **caractérisé en ce que** lesdites buses de pulvérisation (201), qui sont adaptées pour diriger le jet radialement contre ladite surface à nettoyer (141) dudit moyen de filtration, ou corps (14), sont espacées longitudinalement l'une de l'autre et/ou espacées angulairement l'une de l'autre.

15. Filtre selon l'une quelconque des revendications précédentes, **caractérisé en ce qu'**il est prévu des moyens de maintien (22) pour lesdits moyens de nettoyage, c'est-à-dire pour une pluralité respective de types de moyens pour éliminer des résidus ou des particules solides desdits moyens de filtration, ou corps (14), notamment pour un premier (18) et un deuxième (20) type de moyens pour éliminer des résidus ou des particules solides desdits moyens de filtration, ou corps (14), notamment pour un premier (18), un deuxième (20) et un troisième type (28) de moyens pour éliminer des résidus ou des particules solides desdits moyens de filtration, ou corps (14).

16. Filtre selon l'une quelconque des revendications précédentes, **caractérisé en ce que** lesdits moyens élastiques (385) pour pousser lesdits moyens d'engagement (18), ou le bloc d'engagement respectif (380), contre la même surface interne, (141) desdits moyens de filtration, ou corps (14), se présentent sous la forme d'un ressort de torsion (385) qui pousse lesdits moyens d'engagement (18), ou le bloc d'engagement respectif (380), en rotation contre ladite surface interne (141) desdits moyens de filtration, ou corps (14); et **en ce que** lesdits moyens de poussée élastiques (385) sont enroulés sur ledit pivot de rotation (384), notamment en présentant des première et deuxième parties en forme d'hélice correspondantes (385a, 385b), qui sont enroulées sur les deux parties opposées (384a, 384b) dudit pivot de rotation (384) qui font saillie des côtés opposés de ladite partie en saillie (386) dudit bloc allongé (380), et en présentant une branche centrale correspondante en forme de U (385c), qui s'étend radialement à partir desdites première et deuxième parties en forme d'hélice (385a, 385b) et qui vient en contact avec la surface arrière (380p) du corps principal (380') des moyens d'engagement (18), ou du bloc d'engagement respectif (380).
